# EUROPEAN PATENT SPECIFICATION

(11) **EP 4 286 716 B1**
(45) Date of publication and mention of the grant of the patent: **13.11.2024**
(21) Application number: 22383321.1
(22) Date of filing: 30.12.2022
(51) Int. Cl.: F16K 1/52, F02M 21/02, F16K 31/06, F16K 39/02

(54) **PROPORTIONAL HYDROGEN SOLENOID VALVE**
PROPORTIONALES WASSERSTOFFMAGNETVENTIL
ÉLECTROVANNE À HYDROGÈNE PROPORTIONNELLE

(30) Priority: 05.10.2022 ES 202231620 U
(43) Date of publication of application: 06.12.2023
(73) Proprietor: Bitron Industrie Espana, S.a.u, 08930 Sant Adria de Besos (Barcelona) (ES)
(72) Inventor: Galve Borras, Jose, 08930 Sant Adria de Besos (Barcelona) (ES); Fernandez Quirós, Francisco Javier, 08930 Sant Adria de Besos (Barcelona) (ES); Martinez Garcia, Sergi, 08930 Sant Adria de Besos (Barcelona) (ES)
(74) Representative: Isern Patentes y Marcas S.L.

(56) References cited:
- CN-A- 104 653 842
- DE-A1- 102013 223 016
- DE-A1- 19 533 400
- ES-U- 1 271 974
- US-A- 5 810 330
- US-B1- 6 837 478

## Description

### OBJECT OF THE INVENTION

The aim of this application is to provide a proportional hydrogen solenoid valve for hydrogen-fueled engines and hydrogen fuel cell vehicles.

More specifically, the invention proposes the development of a proportional hydrogen solenoid valve intended to withstand high working pressures without needing to oversize the body of the solenoid valve, having means to facilitate the movement of the elements involved in the opening and closing actions of the valve to allow hydrogen to flow.

### BACKGROUND OF THE INVENTION

In the automotive sector, proportional-type solenoid valves intended to regulate the pressure and flow of a fluid are well-known on the market, said valves essentially comprising a fixed core and a mobile core that can move axially relative to said fixed core by the force of a magnetic field created by the electric current of a coil, thereby allowing fluid communication between inlet and outlet ports.

However, the previously described solenoid valves used for the flow of a cooling fluid, for example, do not require high pressures, and thus their design is not initially intended to withstand pressures of 20 bars, for example, as is required if the fluid is hydrogen. This also affects the materials and the design of the sealing means, which are also not designed to work with this pressure range and are therefore not suitable for the flow of hydrogen.

Document ES 1 271 974 U, which describes a proportional solenoid valve suitable for the flow of hydrogen, the common features of which form the preamble of claim 1, is known Although the solenoid valve described in the aforementioned document solves the previous problem, in practice it has been observed that it is possible to improve its operative efficiency and simplify its construction process.

Furthermore, the applicant is currently unaware of an invention that has all the features described in this specification.

On the other hand, is it known US 5 810 330 A which discloses a proportional solenoid valve for a hydraulic brake system for vehicles.

Also, other solenoid valves are disclosed in DE 195 33 400 and DE 10 2013 223016.

### DESCRIPTION OF THE INVENTION

The present invention has been developed with the aim of providing a proportional solenoid valve intended for a hydraulic circuit through which hydrogen flows, which is configured as a novelty within the field of application and solves the aforementioned drawbacks, also providing other additional advantages which will be apparent from the accompanying description below.

An object of the present invention is therefore to provide a proportional hydrogen solenoid valve, intended to regulate the flow of hydrogen, of the type comprising a fixed core and a mobile core that can move axially through a hole relative to said fixed core by the force of a magnetic field created by a coil, in which primary elastic return means linked to the mobile core and secondary elastic means linked to sealing means are provided to allow fluid to flow through inlet and outlet ports, in which the sealing means are located in a slider that is moved by the movement of the mobile core.

Particularly, according to the invention the slider is made up of a substantially cylindrical body defined by a first portion facing the mobile core and a second portion oriented towards the inlet and outlet ports for the circulating fluid, in which the first portion comprises a series of annular recesses and a cavity at the end facing the mobile core, wherein a sealing element coupled to the mobile core can be inserted, in which the second portion comprises a substantially cylindrical recessed cross section in which the second elastic means are inserted, the first portion having a larger external diameter than the second portion, and in which the slider has a termination at the free end of the second portion, said termination made up of a frustoconical section from which a cylindrical extension extends, intended to seal the outlet.

Thanks to these features, the reliability and operation of the solenoid valve are increased by improving aspects related to the slider, which is an important component in the operation. This new design makes it possible to eliminate the use of a PTFE sealing ring, hitherto used in similar designs, and thus reduces the friction of the slider with respect to the valve body as well as the manufacturing costs by reducing the number of components. Another advantageous aspect is that, due to the new configuration, the location of the second elastic means prevents a possible blockage of the elastic means (usually a helical spring), thereby increasing the useful life of the elastic means.

According to another aspect of the invention, a casing is provided to house the fixed core and the mobile core, having a sealing plug that is linked to the fixed core, in which the plug has an extension that extends towards the inside of the casing provided with a threaded portion able to be coupled to a threaded portion on the fixed core.

Advantageously, the mobile core comprises a substantially cylindrical solid body with a central blind hole in which the primary elastic return means are housed, and a sealing element comprising a protruding projection that extends from the face of the mobile core that faces the slider.

According to the invention, a washer is provided that is housed at the end of the mobile core facing the fixed core, the housing being formed by a centrally protruding enlargement around the rim of a blind hole in which the primary elastic return means is located.

Advantageously, the washer is made of a metallic material, and according to the invention the inner diameter thereof is defined by two projecting planes that converge with each other at half the height of the total height of the washer, said planes having dimensions that are complementary to the inner part of the enlargement.

The slider is preferably made of aluminum or an aluminum alloy, given that it is a light material, which allows for a fast actuation speed during the opening and closing operations.

The mobile core and the fixed core are also preferably made of ferritic stainless steel. This prevents or reduces corrosion, since hydrogen is an inert gas. The formation of corrosion directly affects the movement of the mobile core and, consequently, the correct functioning of the solenoid valve.

The proportional solenoid valve described thus represents an innovative structure with structural and constituent features hitherto unknown for the purpose for which it is intended, a fact which, along with its practical utility, provides it with sufficient grounds to obtain the requested exclusivity privilege.

Another aspect of the invention is that the inlet ports and the outlet port are arranged perpendicularly to each other, wherein the outlet port is defined by a tube, one end of which is flush with the position of the inlet ports.

This reduces the changes in the direction of hydrogen flow, thus reducing pressure loss.

Other features and advantages of the proportional solenoid valve object of the present invention will become apparent from the description of a preferred, but not exclusive, embodiment, which is illustrated by way of non-limiting example in the accompanying drawings, wherein:

### BRIEF DESCRIPTION OF DRAWINGS

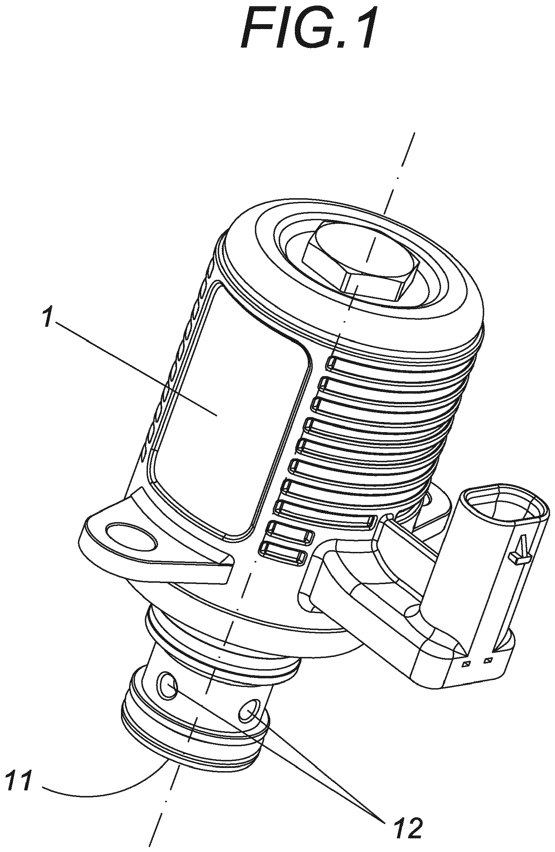

Figure 1 is a perspective view of an embodiment of the solenoid valve according to the present invention;
Figure 2 is an enlarged cross-sectional elevation view of the proportional solenoid valve in an electrically disconnected state, corresponding to the closed position; and
Figure 3 is an enlarged cross-sectional elevation view of the proportional solenoid valve in an electrically powered state, corresponding to the open position.

### DESCRIPTION OF A PREFERRED EMBODIMENT

In light of the aforementioned figures and, according to the numbering adopted, a preferred exemplary embodiment of the invention can be seen in them, which comprises the parts and elements indicated and described in detail below.

In the embodiment represented, the proportional hydrogen solenoid valve is intended to regulate the flow of hydrogen and comprises an outer casing (1), a fixed core (2) and a mobile core (3) that can move axially through a hole relative to said fixed core (2) by the force of a magnetic field created by the electric current in a coil (4) mounted on a coil holder (5) and externally encased or protected by a coil core (6).

Furthermore, primary elastic return means linked to the mobile core and secondary elastic means linked to sealing means are provided to allow fluid to flow through inlet ports (12) and an outlet port (11), wherein the sealing means are located in a slider that is moved by the movement of the mobile core.

Another noteworthy aspect is that the inlet direction of the flow of hydrogen into the inlet ports (12) is perpendicular to the outlet direction defined by the outlet port (11), the inlet ports (12) being radially distributed above the outlet port (11).

The casing in which the fixed core and the mobile core are housed, has a sealing plug (18) at one end that is linked to the fixed core (2), wherein the plug has an extension that extends towards the inside of the casing (1) provided with a threaded portion able to be coupled to a threaded portion on the fixed core (2).

Additionally, a compensation chamber (13) is provided to compensate the flow pressure with the aim of facilitating and assisting the movement of the mobile core (3) and is located between the mobile core (3) and the slider (10), in fluid communication with an area where the inlet (12) and outlet (11) ports are located by means of a passage (14) that runs longitudinally inside the slider (10).

In particular reference to the slider (10), the same is made up of a substantially cylindrical body defined by a first portion facing the mobile core and a second portion oriented towards the inlet and outlet ports for the circulating fluid, in which the first portion comprises a series of annular recesses and a cavity (100) at the end facing the mobile core, wherein a sealing element coupled to the mobile core can be inserted, in which the second portion comprises a substantially cylindrical recessed cross section in which the second elastic means are inserted, the first portion having a larger external diameter than the second portion, and in which the slider has a termination at the free end of the second portion, said termination made up of a frustoconical section (101) from which a cylindrical terminal extension (102) extends, intended to seal the outlet (11).

The mobile core (3) comprises a substantially cylindrical solid body with a central blind hole (30) in which the primary elastic return means are housed, and a sealing element (15) comprising a protruding projection that extends from the face of the mobile core (3) that faces the slider (10) and which includes a polymer coating (19), such as rubber.

The primary elastic return means, which help the mobile core return to its original position when the valve is deactivated, consist of a helical spring (8), while the secondary elastic means, provided to assist the movement of the slider (10), are also made up of a helical spring (9) housed in a cavity inside the slider (10).

A washer (7) is housed at the end of the mobile core (3) that faces the fixed core, the housing being formed by a centrally protruding enlargement around the rim of the blind hole.

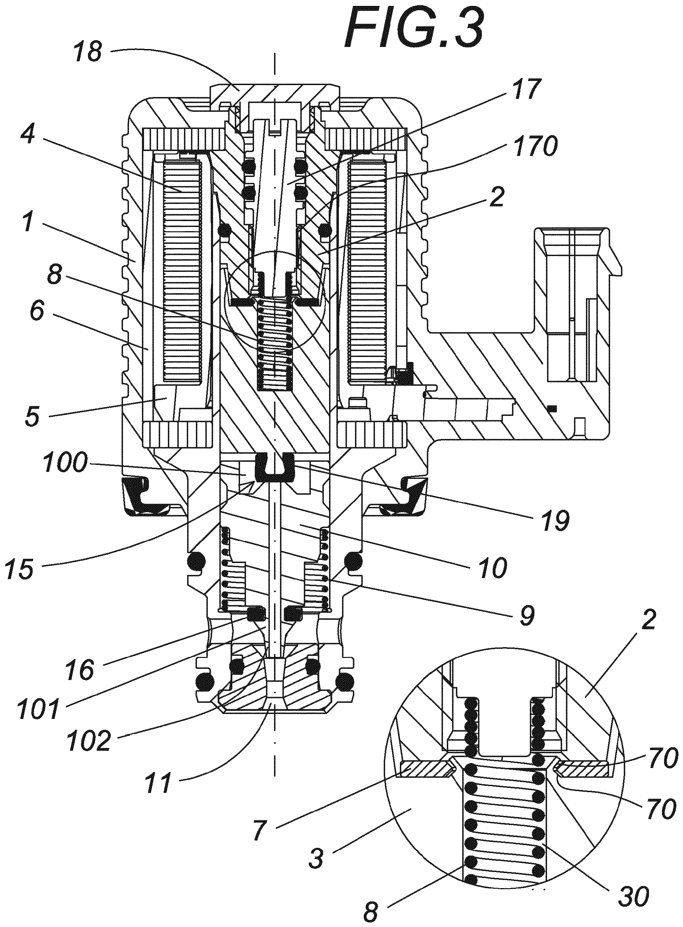

In further reference to the washer (7), the same is made of a metallic material and the inner diameter thereof is defined by two projecting planes (70) that converge with each other at half the height of the total height of the washer (7), said planes having dimensions that are complementary to the inner part of the enlargement, as can be seen in the enlarged detail in figure 3.

Additionally, adjustment means are provided that are configured to adjust the path of motion of the mobile core (2) in order to obtain a suitable or required positioning for optimal operation of the solenoid valve.

Now, relating to these adjustment means, the same comprise a screw (17) with an upper head hidden under the sealing plug (18) and a rod with a threaded region (170) intended to be coupled to the fixed core (2), thereby allowing the position of the fixed core (2) to be adjusted with respect to the mobile core (3).

The operation of the solenoid valve is as follows:

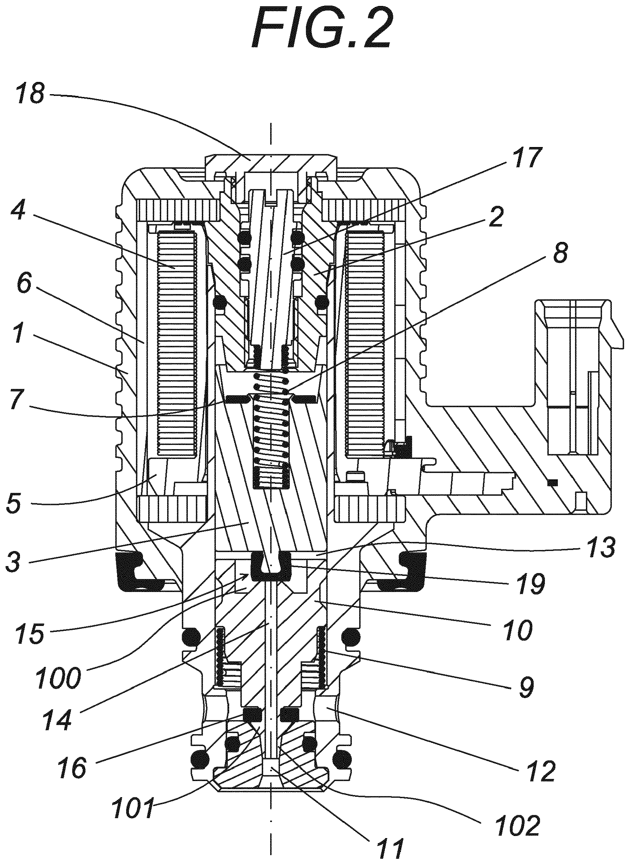

Figure 2 shows the previously described proportional solenoid valve in an electrically disconnected state, which corresponds to the closed position in which hydrogen does not flow through the same, and as such the slider (10) is in the lowest position of its stroke of motion, in which the elastic spring (9) is in a compressed state, such that the sealing gasket (16) abuts the upper rim of the outlet port (11), which prevents fluid circulation between the input ports (12) and the output port (11) located in the lowest part.

Furthermore, figure 3 shows the proportional solenoid valve in an electrically powered state, which corresponds to the open position, in which the coil (4) is causing the mobile core (3) to move upwards, thereby allowing communication between the input ports (12) and the output port (11).

It is also worth mentioning that the terms upper, lower, top, bottom and the other similar terms in the description and claims have been used for descriptive purposes and not necessarily to describe relative positions.

The details, shapes, dimensions and other accessory elements, used to manufacture the proportional solenoid valve of the invention, may be suitably substituted for others which do not depart from the scope defined by the claims which are included below.

## Claims

1. A proportional hydrogen solenoid valve, intended to regulate the flow of hydrogen and comprising a fixed core (2), a mobile core (3), a primary elastic return means (8), a secondary elastic return means (9), a sealing means, inlet and outlet ports (11, 12), a slider (10) and a sealing element (15), wherein the mobile core (3) that can move axially through a hole relative to said fixed core by the force of a magnetic field created by a coil, in which the primary elastic return means are linked to the mobile core (3) and the secondary elastic return means are linked to the sealing means to allow fluid to flow through the inlet and outlet ports, wherein the sealing means are located in the slider (10) that is moved by the movement of the mobile core (3), the slider (10) is made up of a substantially cylindrical body defined by a first portion facing the mobile core (3) and a second portion oriented towards the inlet and outlet ports for the circulating fluid, in which the first portion comprises a series of annular recesses and a cavity (100) at the end facing the mobile core (3), wherein a sealing element (15) coupled to the mobile core (3) can be inserted, wherein the second portion comprises a substantially cylindrical recessed cross section in which the secondary elastic return means are inserted, the first portion having a larger external diameter than the second portion, and in which the slider (10) has a termination at the free end of the second portion intended to seal the outlet (11), wherein a washer (7) is provided that is housed at the end of the mobile core (3) that faces the fixed core (2), a housing being formed by a centrally protruding enlargement around a rim of a blind hole in which the primary elastic return means is located, **characterized in that** the termination is made up of a frustoconical section (101) from which a cylindrical extension (102) extends, and the washer (7) has an internal diameter that is defined by two projecting planes (70) that converge with each other at half the height of the total height of the washer (7), said planes having dimensions that are complementary to a inner part of the enlargement.

2. The proportional solenoid valve according to claim 1, **characterized in that** a casing is provided in which the fixed core and the mobile core (3) are housed, having a sealing plug that is linked to the fixed core (2), in which the plug has an extension that extends towards the inside of the casing provided with a threaded portion able to be coupled to a threaded portion on the fixed core (2).

3. The proportional solenoid valve according to any of the preceding claims, **characterized in that** the mobile core (3) comprises a substantially cylindrical solid body with a central blind hole in which the primary elastic return means are housed, and the sealing element (15) comprising a protruding projection that extends from a face of the mobile core (3) that faces the slider (10).

4. The proportional solenoid valve according to claim 1, **characterized in that** the washer (7) is made of a metallic material.

5. The proportional solenoid valve according to claim 1, **characterized in that** the slider (10) is made of aluminum or an aluminum alloy material.

6. The proportional solenoid valve according to claim 1, **characterized in that** the slider (10) is made of a polymer material.

7. The proportional solenoid valve according to any of the previous claims, **characterized in that** the mobile core (3) and the fixed core are made of ferritic stainless steel.

8. The proportional solenoid valve according to any of the preceding claims, **characterized in that** the inlets ports (12) and the outlet port (11) are arranged perpendicular to each other, wherein the outlet port (11) is defined by a tube, one end of which one is flush with the position of the inlet ports (12).

## Patentansprüche

1. Wasserstoffproportionalmagnetventil, das den Fluss von Wasserstoff regeln soll und einen festen Kern (2), einen mobilen Kern (3), ein primäres elastisches Rückstellmittel (8), ein sekundäres elastisches Rückstellmittel (9), ein Dichtmittel, Einlass- und Auslassanschlüsse (11, 12), einen Gleiter (10) und ein Dichtungselement (15) umfasst, wobei der mobile Kern (3), der sich durch die Kraft eines Magnetfeldes, das von einer Spule erzeugt wird, in der das primäre elastische Rückstellmittel mit dem mobilen Kern (3) verbunden ist und das sekundäre elastische Rückstellmittel mit dem Dichtmittel verbunden ist, um es zu erlauben, dass ein Fluid durch die Einlass- und Auslassanschlüsse fließt, relativ zum festen Kern axial durch ein Loch bewegen kann, wobei sich das Dichtmittel im Gleiter (10) befindet, der durch die Bewegung des mobilen Kerns (3) bewegt wird, der Gleiter (10) aus einem im Wesentlichen zylindrischen Körper besteht, der durch einen ersten Abschnitt, der dem mobilen Kern (3) zugewandt ist, und einen zweiten Abschnitt, der zu den Einlass- und Auslassanschlüssen für das zirkulierende Fluid ausgerichtet ist, definiert ist, in dem der erste Abschnitt eine Reihe von kreisförmigen Ausnehmungen und einen Hohlraum (100) an dem Ende umfasst, das dem mobilen Kern (3) zugewandt ist, in den ein an den mobilen Kern (3) gekoppeltes Dichtungselement (15) eingesetzt werden kann, wobei der zweite Abschnitt einen im Wesentlichen zylindrisch ausgenommenen Querschnitt umfasst, in den das sekundäre elastische Rückstellmittel eingesetzt ist, wobei der erste Abschnitt einen größeren Außendurchmesser aufweist als der zweite Abschnitt und in dem der Gleiter (10) am freien Ende des zweiten Abschnitts einen Abschluss aufweist, der den Auslass (11) abdichten soll, wobei eine Unterlegscheibe (7) bereitgestellt ist, die an dem Ende des mobilen Kerns (3) untergebracht ist, das dem festen Kern (2) zugewandt ist, wobei durch eine zentral vorstehende Vergrößerung um einen Rand eines Blindlochs, in dem sich das primäre elastische Rückstellmittel befindet, ein Umschließung gebildet ist, **dadurch gekennzeichnet, dass** der Abschluss aus einer kegelstumpfförmigen Region (101) besteht, von der sich eine zylindrische Verlängerung (102) erstreckt, und die Unterlegscheibe (7) einen Innendurchmesser aufweist, der durch zwei Projektionsebenen (70) definiert ist, die auf der halben Höhe der Gesamthöhe der Unterlegscheibe (7) miteinander konvergieren, wobei die Ebenen Abmessungen aufweisen, die zu einem inneren Teil der Vergrößerung komplementär sind.

2. Proportionalmagnetventil nach Anspruch 1, **dadurch gekennzeichnet, dass** ein Gehäuse bereitgestellt ist, in dem der feste Kern und der mobile Kern (3) untergebracht sind und das einen Dichtstopfen aufweist, der mit dem festen Kern (2) verbunden ist, in dem der Stopfen eine Verlängerung aufweist, die sich zur Innenseite des Gehäuses erstreckt, und einen Gewindeabschnitt aufweist, der in der Lage ist, an einen Gewindeabschnitt des festen Kerns (2) gekoppelt zu werden.

3. Proportionalmagnetventil nach einem der vorhergehenden Ansprüche, **dadurch gekennzeichnet, dass** der mobile Kern (3) einen im Wesentlichen zylindrischen massiven Körper mit einem zentralen Blindloch umfasst, in dem das primäre elastische Rückstellmittel untergebracht ist, und wobei das Dichtungselement (15) einen vorstehenden Vorsprung umfasst, der sich von einer Fläche des mobilen Kerns (3) erstreckt, die dem Gleiter (10) zugewandt ist.

4. Proportionalmagnetventil nach Anspruch 1, **dadurch gekennzeichnet, dass** die Unterlegscheibe (7) aus einem Metallmaterial besteht.

5. Proportionalmagnetventil nach Anspruch 1, **dadurch gekennzeichnet, dass** der Gleiter (10) aus Aluminium oder einem Aluminiumlegierungsmaterial besteht.

6. Proportionalmagnetventil nach Anspruch 1, **dadurch gekennzeichnet, dass** der Gleiter (10) aus einem Polymermaterial besteht.

7. Proportionalmagnetventil nach einem der vorhergehenden Ansprüche, **dadurch gekennzeichnet, dass** der mobile Kern (3) und der feste Kern aus ferritischem Edelstahl bestehen.

8. Proportionalmagnetventil nach einem der vorhergehenden Ansprüche, **dadurch gekennzeichnet, dass** die Einlassanschlüsse (12) und der Auslassanschluss (11) senkrecht zueinander angeordnet sind, wobei der Auslassanschluss (11) durch ein Rohr definiert ist, von dem ein Ende mit der Position der Einlassanschlüsse (12) bündig ist.

## Revendications

1. Électrovanne proportionnelle à l'hydrogène, destinée à réguler le flux d'hydrogène et comprenant un noyau fixe (2), un noyau mobile (3), un moyen de rappel élastique primaire (8), un moyen de rappel élastique secondaire (9), un moyen d'étanchéité, des orifices d'entrée et de sortie (11, 12), un curseur (10) et un élément d'étanchéité (15), dans laquelle le noyau mobile (3) qui peut se déplacer axialement à travers un trou par rapport audit noyau fixe par la force d'un champ magnétique créé par une bobine, dans laquelle le moyen de rappel élastique primaire est lié au noyau mobile (3) et le moyen de rappel élastique secondaire est lié au moyen d'étanchéité pour permettre l'écoulement de fluide à travers les orifices d'entrée et de sortie, dans laquelle le moyen d'étanchéité est situé dans le curseur (10) qui est déplacé par le mouvement du noyau mobile (3), le curseur (10) est constitué d'un corps sensiblement cylindrique défini par une première partie faisant face au noyau mobile (3) et une seconde partie orientée vers les orifices d'entrée et de sortie pour le fluide en circulation, dans laquelle la première partie comprend une série d'évidements annulaires et une cavité (100) à l'extrémité faisant face au noyau mobile (3), dans laquelle un élément d'étanchéité (15) accouplé au noyau mobile (3) peut être inséré, dans laquelle la seconde partie comprend une section transversale évidée sensiblement cylindrique dans laquelle le moyen de rappel élastique secondaire est inséré, la première partie ayant un diamètre externe plus grand que la seconde partie, et dans laquelle le curseur (10) a une terminaison à l'extrémité libre de la seconde partie destinée à obturer la sortie (11), dans laquelle une rondelle (7) est prévue qui est logée à l'extrémité du noyau mobile (3) qui fait face au noyau fixe (2), un boîtier étant formé par un élargissement en saillie centrale autour d'un bord d'un trou borgne dans lequel le moyen de rappel élastique primaire est situé, **caractérisée en ce que** la terminaison est constituée d'une section tronconique (101) à partir de laquelle s'étend une extension cylindrique (102), et la rondelle (7) a un diamètre interne qui est défini par deux plans de projection (70) qui convergent l'un vers l'autre à la moitié de la hauteur de la hauteur totale de la rondelle (7), lesdits plans ayant des dimensions complémentaires à une partie interne de l'élargissement.

2. Électrovanne proportionnelle selon la revendication 1, **caractérisée en ce qu'**un boîtier est fourni dans lequel le noyau fixe et le noyau mobile (3) sont logés, ayant un bouchon d'étanchéité qui est relié au noyau fixe (2), dans laquelle le bouchon a une extension qui s'étend vers l'intérieur du boîtier pourvue d'une partie filetée pouvant être accouplée à une partie filetée sur le noyau fixe (2).

3. Électrovanne proportionnelle selon l'une quelconque des revendications précédentes, **caractérisée en ce que** le noyau mobile (3) comprend un corps solide sensiblement cylindrique avec un trou borgne central dans lequel le moyen de rappel élastique primaire est logé, et l'élément d'étanchéité (15) comprenant une projection en saillie qui s'étend à partir d'une face du noyau mobile (3) qui fait face au curseur (10).

4. Électrovanne proportionnelle selon la revendication 1, **caractérisée en ce que** la rondelle (7) est constituée d'un matériau métallique.

5. Électrovanne proportionnelle selon la revendication 1, **caractérisée en ce que** le curseur (10) est constitué d'aluminium ou d'un matériau d'alliage d'aluminium.

6. Électrovanne proportionnelle selon la revendication 1, **caractérisée en ce que** le curseur (10) est constitué d'un matériau polymère.

7. Électrovanne proportionnelle selon l'une quelconque des revendications précédentes, **caractérisée en ce que** le noyau mobile (3) et le noyau fixe sont constitués d'acier inoxydable ferritique.

8. Électrovanne proportionnelle selon l'une quelconque des revendications précédentes, **caractérisée en ce que** les orifices d'entrée (12) et l'orifice de sortie (11) sont agencés perpendiculairement les uns par rapport aux autres, dans laquelle l'orifice de sortie (11) est défini par un tube, dont une extrémité est au ras de la position des orifices d'entrée (12).
